# EUROPEAN PATENT APPLICATION

(11) **EP 4 530 019 A1**
(43) Date of publication of application: **02.04.2025**
(21) Application number: 24157424.3
(22) Date of filing: 13.02.2024
(51) Int. Cl.: B25B 13/06, F16B 23/00

(54) **HIGH TORQUE TRANSMISSION NUT AND DRIVING TOOL THEREFOR**

(30) Priority: 28.09.2023 TW 112137425
(71) Applicant: Kwantex Research Inc., Tainan City 718012 (TW)
(72) Inventor: LIN, Chao-Wei, 718012 Tainan City (TW)
(74) Representative: Stöckeler, Ferdinand

(57) **Abstract**

A nut (1) includes a nut body (11) that defines a circular hole (12), and that has four driven wall portions (111) and four guiding wall portions (112) disposed about a central axis of the nut (1) in an alternating arrangement. The driven wall portions (111) are equiangularly spaced apart from each other. Each of the guiding wall portions (112) is straight, and has two opposite ends that are respectively connected to two of the driven wall portions (111) adjacent to the guiding wall portion (112). A ratio of a longest distance (B) between two of the driven wall portions (111) that are non-adjacent to each other to a longest distance (A) between two of the driven wall portions (111) that are adjacent to each other is greater than 1.16. Each of the driven wall portions (111) has a curved section (113) and two straight sections (114).

## Description

The disclosure relates to a nut and a tool for driving the nut, and more particularly to an anti-slip high torque transmission nut and a driving tool therefor.

A conventional hexagonal nut is in the shape of a hexagonal prism, and defines a threaded hole that extends therethrough along a central axis thereof. The conventional hexagonal nut is drivable by a wrench to rotate so that the threaded hole thereof may be tightened to a mating bolt, thereby fastening objects between the conventional hexagonal nut and the mating bolt.

However, the conventional hexagonal nut has a plurality of sharp edges that are formed on an outer wall surface thereof, and the sharp edges may easily be worn when the conventional hexagonal nut is driven by the wrench to rotate. When the sharp edges of the conventional hexagonal nut are worn, a contact area between the conventional hexagonal nut and the wrench is decreased, and a torque exerted by a user may thus not be sufficiently transmitted to conventional hexagonal nut.

Furthermore, if the sharp edges are greatly worn out, the outer wall surface of the conventional hexagonal nut may become curved. Consequently, when the user uses the wrench to turn the conventional hexagonal nut, the wrench may slip off the conventional hexagonal nut. In addition, when the conventional hexagonal nut is tightened to the mating bolt and when the threaded hole of the conventional hexagonal nut is covered with rust, the user has to exert more torque to remove the conventional hexagonal nut from the mating bolt. At this time, if the conventional hexagonal nut is in a fragile state where the conventional hexagonal nut may wear out easily, or if the sharp edges of the conventional hexagonal nut are already worn out, the user may experience great difficulty in unscrewing the conventional hexagonal nut.

Therefore, an object of the disclosure is to provide a nut that may not be worn easily and that may not cause a driving tool/wrench which drives the nut to slip off easily.

According to an aspect of the disclosure, there is provided a nut according to claim 1.

Another object of the disclosure is to provide a driving tool that can alleviate at least one of the drawbacks of the prior art.

According to an aspect of the disclosure, there is provided a driving tool according to claim 4.

Other features and advantages of the disclosure will become apparent in the following detailed description of the embodiment(s) with reference to the accompanying drawings. It is noted that various features may not be drawn to scale.
FIG. 1 is a top view of an embodiment of a nut according to the disclosure.
FIG. 2 is a schematic view illustrating a nut body of the nut.
FIG. 3 is a perspective view of the nut.
FIG. 4 is a schematic sectional view illustrating the nut used in conjunction with a bolt.
FIG. 5 is a schematic view illustrating a wrench turning the nut.
FIG. 6 is a perspective view of an embodiment of a driving tool according to the disclosure and the nut that is in conjunction with the bolt.
FIG. 7 is a top view of a driving socket of the driving tool.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

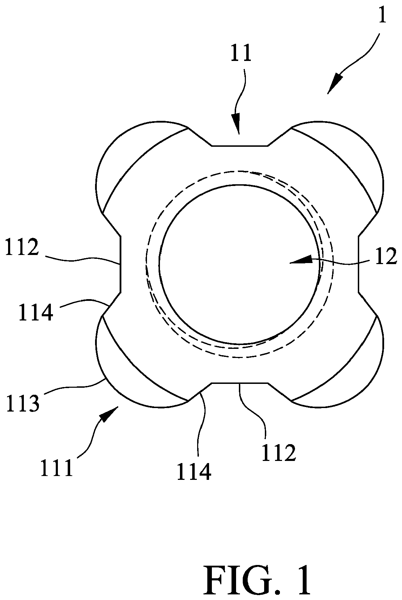

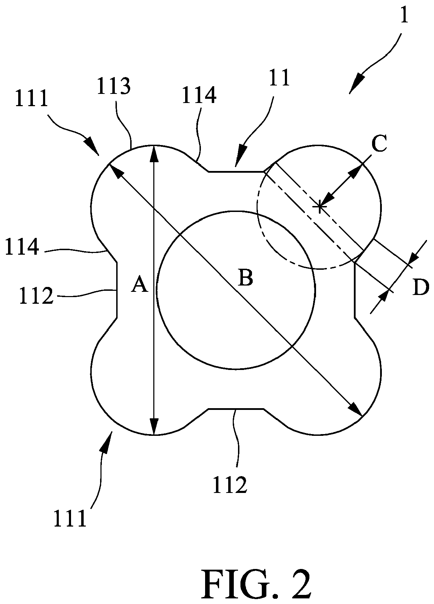

Referring to FIGS. 1 to 3, an embodiment of a nut 1 according to the disclosure includes a nut body 11 that has an inner surrounding surface defining a circular hole 12. The inner surrounding surface of the nut body 11 is formed with a thread that helically extends along the circular hole 12. The nut body 11 has four driven wall portions 111 and four guiding wall portions 112 that are disposed about a central axis of the nut 1 in an alternating arrangement. The driven wall portions 111 are equiangularly spaced apart from each other. Each of the guiding wall portions 112 is straight and has two opposite ends that are respectively connected to two of the driven wall portions 111 adjacent to the guiding wall portion 112. A ratio of a longest distance (B) between two of the driven wall portions 111 that are non-adjacent to each other to a longest distance (A) between two of the driven wall portions 111 that are adjacent to each other is greater than 1.16 (i.e., (B) divided by (A) is greater than 1.16), and is also greater than a ratio of a distance across corners of a regular hexagon to a distance across flats of the regular hexagon, which is 1.1547. Therefore, the likelihood that a wrench slips off the nut 1 during operation may be greatly lowered.

Each of the driven wall portions 111 has a curved section 113 that defines an arc of a circle and that has two opposite ends, and two straight sections 114 each of which extends from a respective one of the ends of the curved section 113 and interconnects the respective one of the ends of the curved section 113 and a respective one of two of the guiding wall portions 112 adjacent to the driven wall portion 111. A central angle of the curved section 113 of each of the driven wall portions 111 is smaller than 180 degrees, an arc length of the curved section 113 of each of the driven wall portions 111 on an imaginary plane perpendicular to the central axis of the nut 1 is thus shorter than half of a circumference of the circle defined by the curved section 113 of the driven wall portion 111. A radius of curvature (C) of the curved section 113 of each of the driven wall portions 111 is greater than a length (D) of each of the straight sections 114 of the driven wall portion 111. By virtue of the straight sections 114, the nut 1 may easily be separated from a mold during its manufacturing process. Thus, the mold for the nut 1 may avoid damage caused by failure to be separated from the nut 1, thereby increasing the service life of the mold for the nut 1.

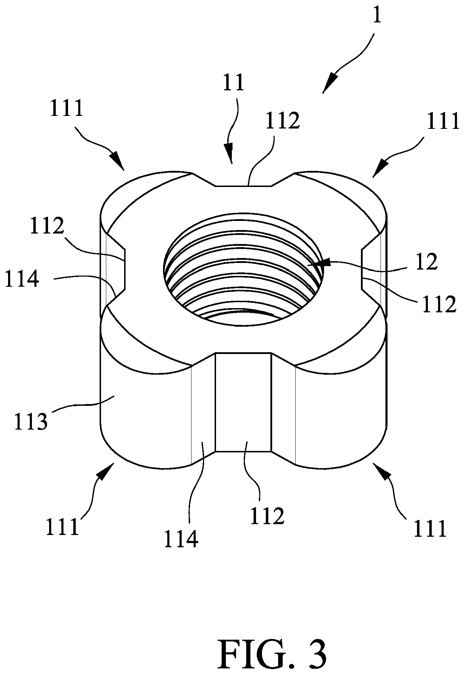

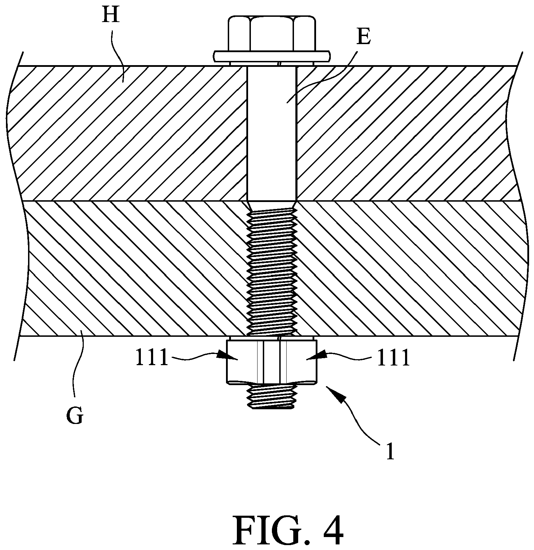

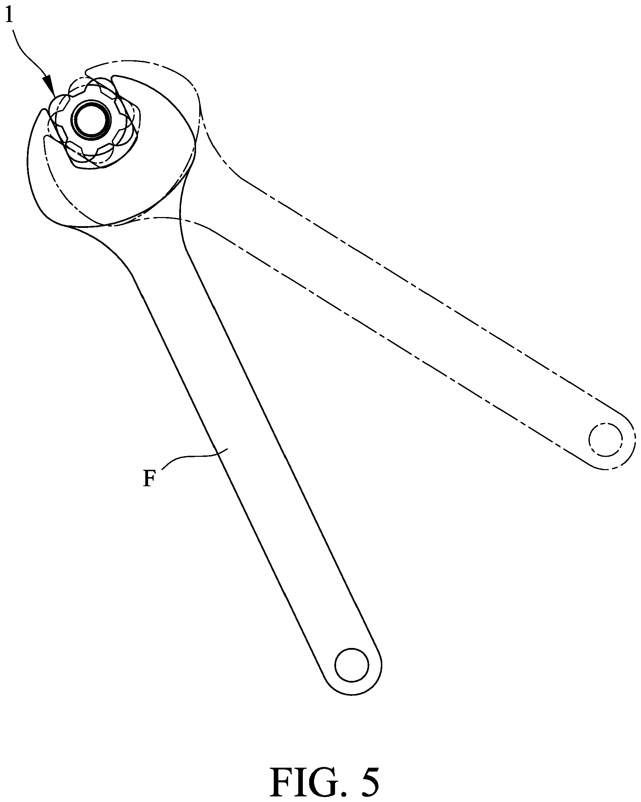

Referring to FIGS. 4 and 5, in cooperation with FIG. 3, when a user uses the nut 1, the user may urge the nut 1 to abut against an outer thread of a bolt (E) and then rotate the nut 1 with his/her finger pulps so that the nut 1 may be tightened to the outer thread of the bolt (E). Afterwards, the user may use a wrench (F) to drive the nut 1 to rotate so that objects (G, H) between the nut 1 and the bolt (E) may be tightly fastened. In addition, the user may use a power tool (e.g. an electric wrench) to urge the bolt (E) to rotate so that the objects (G, H) may be fastened more tightly. By virtue of the curved sections 113 of the driven wall portions 111 of the nut 1, the user may not feel uncomfortable when rotating the nut 1 with his/her finger pulps. Moreover, a distance between the central axis of the nut 1 and each of the driven wall portions 111 on the imaginary plane perpendicular to the central axis is greater than a distance between the central axis and each of corners of an imaginary rectangle defined by the guiding wall portions 112 on the imaginary plane. Thus, when the user rotates the nut 1 with his/her finger pulps, the curved sections 113 of the driven wall portions 111 of the nut 1 may be adapted for the user's fingers to abut thereagainst. Consequently, the user may easily exert a torque on the nut 1, and the user's fingers may not slip off the nut 1, thereby increasing the efficiency of the operation.

Because a conventional hexagonal nut has a plurality of sharp edges that are prone to abrasion, a torque exerted by the user or by the power tool may not be steadily transmitted to the conventional hexagonal nut. Thus, when the user rotates the conventional hexagonal nut by a tool, the tool may slip off the conventional hexagonal nut even when the conventional hexagonal nut is not rotated by 90 degrees. The user may not be able to urge the conventional hexagonal nut to rotate unless the user removes the tool from the conventional hexagonal nut and then couples the tool to the conventional hexagonal nut again, which makes the operation time-consuming. However, when the user rotates the nut 1 via the wrench (F), by virtue of the curved sections 113 of the nut 1, the nut 1 may avoid abrasion and damage during the operation, and the torque exerted on the wrench (F) may be sufficiently transmitted to the nut 1. Therefore, every time when the user rotates the nut 1 by the wrench (F), the user may urge the nut 1 to steadily rotate by almost 90 degrees with one single movement, which saves time for the operation. Moreover, when the user uses the power tool to urge the bolt (E) to rotate while restraining movement of the nut 1 by the wrench (F), even though there are vibrations generated by the power tool and rotation of the bolt (E), by virtue of the nut 1 being anti-slippery, the wrench (F) may not slip off the nut 1, thereby enhancing the stability and safety during the operation.

Referring to FIG. 4 again, the objects (G, H) are stacked, the bolt (E) extends through the objects (G, H), and the nut 1 is located at one side of the object (G) opposite to the object (H) to cooperate with the bolt (E) to fasten the object (G) to the object (H). By virtue of the driven wall portions 111 of the nut 1, an overall structural appearance of the nut 1 is relatively pleasing, and, when the nut 1 and the bolt (E) cooperatively fasten the object (G) to the object (H), a contact area between the nut 1 and the object (G) may be relatively large, in comparison with a contact area between the conventional hexagonal nut and the object (G) when the bolt (E) cooperates with the conventional hexagonal nut to fasten the object (G) to the object (H). Therefore, even if the object (G) is relatively soft, by virtue of the contact area between the nut 1 and the object (G) being relatively large, pressure that the nut 1 applies on the object (G) may be reduced, thereby avoiding damage on a surface of the object (G). Consequently, a washer that is generally disposed on the surface of the object (G) for protecting the surface of the object (G) may not be necessary.

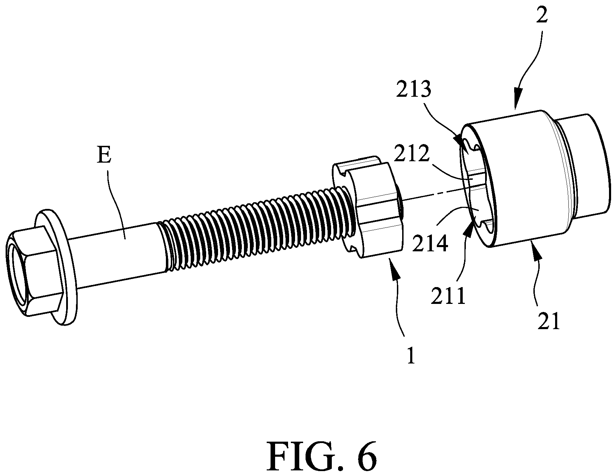

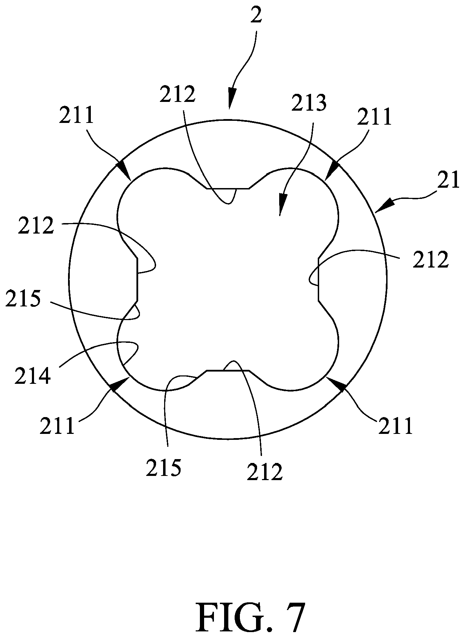

Referring further to FIGS. 6 and 7, an embodiment of a driving tool 2 according to the disclosure is adapted for driving the nut 1, and includes a tool body 21. The tool body 21 has four driving wall portions 211 and four guiding wall portions 212 that are disposed about a central axis of the driving tool 2 in an alternating arrangement. The driving wall portions 211 of the tool body 21 are equiangularly spaced apart from each other. Each of the guiding wall portions 212 of the tool body 21 is straight and has two opposite ends that are respectively connected to two of the driving wall portions 211 of the tool body 21 adjacent to the guiding wall portion 212 of the tool body 21. The driving wall portions 211 and the guiding wall portions 212 of the tool body 21 cooperatively define a driving socket 213 that is used to be coupled to the nut 1. A ratio of a longest distance between two of the driving wall portions 211 of the tool body 21 that are non-adjacent to each other to a longest distance between two of the driving wall portions 211 of the tool body 21 that are adjacent to each other is greater than 1.16. Each of the driving wall portions 211 of the tool body 21 has a curved section 214 that defines an arc of a circle and that has two opposite ends, and two straight sections 215 each of which extends from a respective one of the ends of the curved section 214 of the tool body 21 and interconnects the respective one of the ends of the curved section 214 of the tool body 21 and a respective one of two of the guiding wall portions 212 of the tool body 21 adjacent to the driving wall portion 211 of the tool body 21. A central angle of the curved section 214 of each of the driving wall portions 211 of the tool body 21 is smaller than 180 degrees, an arc length of the curved section 214 of each of the driving wall portions 211 on an imaginary plane perpendicular to the central axis of the driving tool 2 is thus shorter than half of a circumference of the circle defined by the curved section 214 of the driving wall portion 211. A radius of curvature of the curved section 214 of each of the driving wall portions 211 of the tool body 21 is greater than a length of each of the straight sections 215 of the driving wall portion 211 of the tool body 21. By virtue of the central angle of the curved section 214 of each of the driving wall portions 211 of the tool body 21 being smaller than 180 degrees, the straight sections 215 of the driving wall portion 211 may not be too short. By virtue of the straight sections 114, 215, a contact area between the driving tool 2 and the nut 1 is increased. Although manufacturing tolerance exists in the driving tool 2 and the nut 1, the driving tool 2 and the nut 1 may be able to fittingly engage with each other by the presence of the straight sections 114, 215 so that a torque exerted on the driving tool 2 may be sufficiently transmitted to the nut 1, and that the stability during operation may be enhanced.

In summary, by virtue of the ratio of the longest distance (B) between two of the driven wall portions 111 that are non-adjacent to each other to the longest distance (A) between two of the driven wall portions 111 that are adjacent to each other being greater than 1.16 and greater than the ratio of the distance across the corners of the regular hexagon to the distance across the flats of the regular hexagon, which is 1.1547, the likelihood that the driving tool 2 or the wrench (F) slips off the nut 1 during operation may be greatly lowered. By virtue of the curved sections 113 of the nut 1, the nut 1 may avoid abrasion and damage during the operation, and the torque exerted on the driving tool 2 or the wrench (F) may be sufficiently transmitted to the nut 1, which enhances the stability during operation and reduces the difficulty of the operation. By virtue of the straight sections 114, 215, the contact area between the driving tool 2 and the nut 1 is increased. Although manufacturing tolerance exists in the driving tool 2 and the nut 1, the driving tool 2 and the nut 1 may be able to fittingly engage with each other by the presence of the straight sections 114, 215 so that the torque exerted on the driving tool 2 may be sufficiently transmitted to the nut 1, and that the stability during operation may be enhanced. Therefore, the purpose of the disclosure is achieved.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A nut (1) comprising:
a nut body (11);
**characterized in that**:
the nut body (11) defines a circular hole (12), and has four driven wall portions (111) and four guiding wall portions (112) that are disposed about a central axis of the nut (1) in an alternating arrangement, the driven wall portions (111) being equiangularly spaced apart from each other, each of the guiding wall portions (112) being straight and having two opposite ends that are respectively connected to two of the driven wall portions (111) adjacent to the guiding wall portion (112), a ratio of a longest distance (B) between two of the driven wall portions (111) that are non-adjacent to each other to a longest distance (A) between two of the driven wall portions (111) that are adjacent to each other being greater than 1.16, each of the driven wall portions (111) having a curved section (113) that defines an arc of a circle and that has two opposite ends, and two straight sections (114) each of which extends from a respective one of the ends of the curved section (113) and interconnects the respective one of the ends of the curved section (113) and a respective one of two of the guiding wall portions (112) adjacent to the driven wall portion (111), a central angle of the curved section (113) of each of the driven wall portions (111) being smaller than 180 degrees.

2. The nut (1) as claimed in claim 1, wherein a radius of curvature (C) of the curved section (113) of each of the driven wall portions (111) is greater than a length (D) of each of the straight sections (114) of the driven wall portion (111).

3. The nut (1) as claimed in any one of claims 1 and 2, wherein the nut body (11) has an inner surrounding surface defining the circular hole (12) and being formed with a thread that helically extends along the circular hole (12).

4. A driving tool (2) adapted for driving the nut (1) as claimed in claim 1, the driving tool (2) comprising:
a tool body (21);
**characterized in that**:
the tool body (21) has four driving wall portions (211) and four guiding wall portions (212) that are disposed about a central axis of the driving tool (2) in an alternating arrangement, the driving wall portions (211) of the tool body (21) being equiangularly spaced apart from each other, each of the guiding wall portions (212) of the tool body (21) being straight and having two opposite ends that are respectively connected to two of the driving wall portions (211) of the tool body (21) adjacent to the guiding wall portion (212) of the tool body (21), the driving wall portions (211) and the guiding wall portions (212) of the tool body (21) cooperatively defining a driving socket (213), a ratio of a longest distance between two of the driving wall portions (211) of the tool body (21) that are non-adjacent to each other to a longest distance between two of the driving wall portions (211) of the tool body (21) that are adjacent to each other being greater than 1.16, each of the driving wall portions (211) of the tool body (21) having a curved section (214) that defines an arc of a circle and that has two opposite ends, and two straight sections (215) each of which extends from a respective one of the ends of the curved section (214) of the tool body (21) and interconnects the respective one of the ends of the curved section (214) of the tool body (21) and a respective one of two of the guiding wall portions (212) of the tool body (21) adjacent to the driving wall portion (211) of the tool body (21), a central angle of the curved section (214) of each of the driving wall portions (211) of the tool body (21) being smaller than 180 degrees.

5. The driving tool (2) as claimed in claim 4, wherein a radius of curvature of the curved section (214) of each of the driving wall portions (211) of the tool body (21) is greater than a length of each of the straight sections (215) of the driving wall portion (211) of the tool body (21).
